# EUROPEAN PATENT SPECIFICATION

(11) **EP 2 863 559 B1**
(45) Date of publication and mention of the grant of the patent: **16.05.2018**
(21) Application number: 13805066.1
(22) Date of filing: 14.06.2013
(51) Int. Cl.: H04B 11/00

(54) **AUDIO DATA TRANSMISSION SYSTEM, AUDIO DATA TRANSMISSION DEVICE, AND ELECTRONIC SIGNATURE TOOL**
TONDATENÜBERTRAGUNGSSYSTEM, TONDATENÜBERTRAGUNGSVORRICHTUNG UND ELEKTRONISCHES UNTERSCHRIFTENWERKZEUG
SYSTÈME DE TRANSMISSION DE DONNÉES AUDIO, DISPOSITIF DE TRANSMISSION DE DONNÉES AUDIO ET OUTIL DE SIGNATURE ÉLECTRONIQUE

(30) Priority: 16.06.2012 CN 201210204392
(43) Date of publication of application: 22.04.2015
(73) Proprietor: Tendyron Corporation, Beijing 100083 (CN)
(72) Inventor: LI, Dongsheng, Beijing 100083 (CN)
(74) Representative: Maiwald Patentanwalts GmbH
(86) International application number: PCT/CN2013/077087
(87) International publication number: WO 2013/185596

(56) References cited:
- WO-A1-2009/027639
- WO-A1-2010/000187
- CN-A- 1 345 492
- CN-A- 102 223 234
- CN-A- 102 739 320
- CN-A- 102 739 323
- CN-A- 102 739 587
- CN-A- 102 752 058
- CN-U- 202 940 815
- CN-U- 202 940 815
- CN-U- 202 940 816
- CN-U- 202 940 816
- US-A- 5 479 562
- US-A- 5 857 000
- US-A1- 2013 013 095

## Description

### FIELD

Embodiments of the present disclosure generally relate to an electronic technique field, and more particularly, to an audio data transmission system, an audio data transmission apparatus for a mobile terminal and an electronic signature token.

### BACKGROUND

In a current audio data transmission via an audio interface, different mobile terminals have different audio transmission characteristics. In order to be compatible with the audio transmission characteristics of different mobile terminals, an apparatus (such as an electronic signature token) communicating with the mobile terminal needs to try with audio data in different modulation modes automatically so as to find a most suitable modulation mode matched with each of the different mobile terminals.

Currently, there are few audio communication means, and consequently no suitable mode can be compatible with the communication between different mobile terminals and different electronic signature tokens.

Moreover, since both sides in the communication may not necessarily be fixed and can have their own different audio transmission characteristics, when the demodulation mode and the modulation mode not matched with each other are adopted during the audio data transmission, a data interaction speed may be reduced and it is easy for a distortion to occur in the interactive data.

CN 102 223 234 A discloses an electronic signature system and method based audio communication.

### SUMMARY

Embodiments of the present disclosure seek to solve at least one of the problems existing in the related art to at least some extent. Aspects of the present invention are defined by the independent claims. Further embodiments are provided by the dependent claims.

Accordingly, a first objective of the present disclosure is to provide an audio data transmission system, which can perform audio data interaction quickly and reduce the distortion degree of the interactive data largely. A second objective of the present disclosure is to provide an audio data transmission apparatus for a mobile terminal. A third objective of the present disclosure is to provide an electronic signature token.

In order to achieve the above objectives, embodiments of a first aspect of the present disclosure provide an audio data transmission system, including a first device and a second device connected with each other via an audio interface, in which the first device modulates audio data to be transmitted using at least two modulation modes to generate audio data frame streams in the at least two modulation modes, splices the audio data frame streams in the at least two modulation modes into an audio data stream and transmits the audio data stream to the second device in one transmission via the audio interface.

With the audio data transmission system according to embodiments of the present disclosure, the data stream interaction between the first device and the second device can be performed rapidly, and a success rate of the data transmission is increased greatly. In addition, the probability of data transmission failure due to a degree of distortion during the data interaction is decreased and the quality of the data interaction is also improved.

In an embodiment of the present disclosure, the first device is further configured to transmit the audio data stream to the second device in one transmission in a same time reference frame via the audio interface.

In some embodiments, the same time reference frame means that a length of a start moment and/or an end moment at a time period of each modulation waveform with respect to a predetermined reference moment is predetermined.

In another embodiment of the present disclosure, the first device is further configured to transmit the audio data stream to the second device in one transmission in different time reference frames via the audio interface.

In some embodiments, the different time reference frames are frames in which a start moment of each modulation waveform is obtained according to a synchronization head information.

Furthermore, the synchronization head information configured to indicate the start moment of each modulation waveform is generated when the first device modulates the audio data to be transmitted into the audio data frame streams, and the generated synchronization head information is added into the audio data frame streams.

In an embodiment of the present disclosure, the audio data to be transmitted are identification data in a fixed format or transmission data containing a variable content.

In addition, the audio data frame streams are generated by: modulating the audio data to be transmitted into an analog waveform signal using the modulation modes of the first device so as to generate the audio data frame streams.

In some embodiments, the modulation mode is an amplitude modulation, a frequency modulation, a carrier modulation or a subcarrier modulation.

In an embodiment of the present disclosure, a manner of the splicing is a splicing manner without a time interval or a splicing manner with a time interval.

Specifically, the first device is a mobile terminal and the second device is an electronic signature token.

In order to achieve the above objectives, embodiments of a second aspect of the present disclosure provide an audio data transmission apparatus for a mobile terminal, including: a modulating module configured to modulate audio data to be transmitted using at least two modulation modes to generate audio data frame streams in the at least two modulation modes; a splicing module configured to splice the audio data frame streams in the at least two modulation modes into an audio data stream; a transmitting module configured to transmit the audio data stream to an electronic signature token in one transmission via an audio interface of the mobile terminal.

With the audio data transmission apparatus for the mobile terminal according to embodiments of the present disclosure, the data interaction between the audio data transmission apparatus and the electronic signature token can be performed rapidly, an interaction speed is improved and a success rate of the data transmission is increased greatly. In addition, the probability of data transmission failure due to a degree of distortion during the data interaction is decreased and the quality of the data interaction is also improved.

In an embodiment of the present disclosure, the transmitting module is further configured to transmit the audio data stream to the electronic signature token in one transmission in a same time reference frame via the audio interface of the mobile terminal.

In some embodiments, the same time reference frame means that a length of a start moment and/or an end moment at a time period of each modulation waveform with respect to a predetermined reference moment is predetermined.

In another embodiment of the present disclosure, the transmitting module is further configured to transmit the audio data stream to the electronic signature token in one transmission in different time reference frames via the audio interface of the mobile terminal.

In some embodiments, the different time reference frames are frames in which a start moment of each modulation waveform is obtained according to a synchronization head information.

Furthermore, in an embodiment of the present disclosure, the synchronization head information configured to indicate the start moment of each modulation waveform is generated when the modulating module modulates the audio data to be transmitted into the audio data frame streams, and the generated synchronization head information is added into the audio data frame streams.

In some embodiments, the audio data to be transmitted are identification data in a fixed format or transmission data containing a variable content.

In an embodiment of the present disclosure, the modulating module is further configured to modulate the audio data to be transmitted into an analog waveform signal using the modulation modes of the apparatus so as to generate the audio data frame streams.

Moreover, the modulating module modulates in following manners: an amplitude modulation, a frequency modulation, a carrier modulation or a subcarrier modulation.

In addition, in an embodiment of the present disclosure, a manner of the splicing is a splicing manner without a time interval or a splicing manner with a time interval.

In order to achieve the above objectives, embodiments of a third aspect of the present disclosure provide an electronic signature token, including: a modulating module configured to modulate audio data to be transmitted using at least two modulation modes to generate audio data frame streams in the at least two modulation modes; a splicing module configured to splice the audio data frame streams in the at least two modulation modes into an audio data stream; a transmitting module configured to transmit the audio data stream to a mobile terminal in one transmission via an audio interface of the electronic signature token.

With the electronic signature token according to embodiments of the present disclosure, the data interaction between the electronic signature token and the mobile terminal can be performed rapidly, and a success rate of the data transmission is increased greatly. In addition, the probability of data transmission failure due to a degree of distortion during the data interaction is decreased and the quality of the data interaction is also improved.

In an embodiment of the present disclosure, the transmitting module is further configured to transmit the audio data stream to the mobile terminal in one transmission in a same time reference frame via the audio interface of the electronic signature token.

In some embodiments, the same time reference frame means that a length of a start moment and/or an end moment at a time period of each modulation waveform with respect to a predetermined reference moment is predetermined.

In another embodiment of the present disclosure, the transmitting module is further configured to transmit the audio data stream to the mobile terminal in one transmission in different time reference frames via the audio interface of the electronic signature token.

In some embodiments, the different time reference frames are frames in which a start moment of each modulation waveform is obtained according to a synchronization head information.

Furthermore, in an embodiment of the present disclosure, the synchronization head information configured to indicate the start moment of each modulation waveform is generated when the modulating module modulates the audio data to be transmitted into the audio data frame streams, and the generated synchronization head information is added into the audio data frame streams.

In some embodiments, the audio data to be transmitted are identification data in a fixed format or transmission data containing a variable content.

In an embodiment of the present disclosure, the modulating module is further configured to modulate the audio data to be transmitted into an analog waveform signal using the modulation modes of the electronic signature token so as to generate the audio data frame streams.

Moreover, the modulating module modulates in following manners: an amplitude modulation, a frequency modulation, a carrier modulation or a subcarrier modulation.

In addition, in an embodiment of the present disclosure, a manner of the splicing is a splicing manner without a time interval or a splicing manner with a time interval.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a flow chart of an audio data transmission method according to an embodiment of the present disclosure;
Fig. 2 is a block diagram of an audio data transmission system according to an embodiment of the present disclosure;
Fig. 3 is a specific block diagram of an audio data transmission system according to an embodiment of the present disclosure;
Fig. 4 is a schematic diagram of an audio data transmission apparatus for a mobile terminal according to an embodiment of the present disclosure;
Fig. 5 is a schematic diagram of an electronic signature token according to an embodiment of the present disclosure; and
Fig. 6 is a schematic diagram of a same time reference frame of an audio data transmission method according to an embodiment of the present disclosure.

### DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. The embodiments described herein according to drawings are explanatory and illustrative, not construed to limit the present disclosure.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied. Moreover, a structure in which a first feature is "on" a second feature may include an embodiment in which the first feature directly contacts the second feature, and may also include an embodiment in which an additional feature is formed between the first feature and the second feature so that the first feature does not directly contact the second feature.

In the description of the present disclosure, unless specified or limited otherwise, it should be noted that, terms "mounted," "connected" and "coupled" may be understood broadly, such as electronic connection or mechanical connection, inner communication between two elements, direct connection or indirect connection via intermediary. These having ordinary skills in the art should understand the specific meanings in the present disclosure according to specific situations.

With reference to the following descriptions and drawings, these and other aspects of embodiments of the present disclosure will be distinct. In the descriptions and drawings, some particular embodiments are described in order to show means of the principles of embodiments according to the present disclosure, however, it should be appreciated that the scope of embodiments according to the present disclosure is not limited. On the contrary, embodiments of the present disclosure include all the changes, alternatives, and modifications falling into the scope of the spirit and principles of the attached claims.

An audio data transmission method according to embodiments of the present disclosure will be described firstly with reference to the drawings.

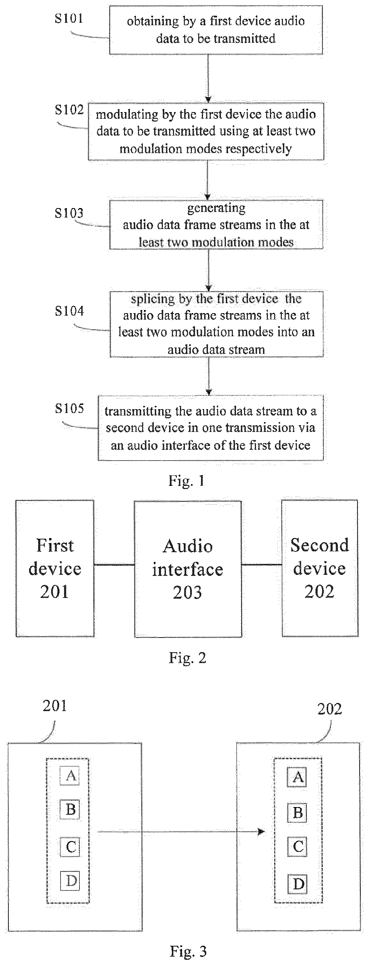

As shown in Fig. 1, the audio data transmission method includes following steps.

At step S101, a first device obtains audio data to be transmitted.

In an embodiment of the present disclosure, the first device may be a mobile terminal. Specifically, the mobile terminal may be a mobile phone or a tablet PC, but is not limited to these. The audio data mean data transmitted in an audio manner. The audio data to be transmitted may be identification data in a fixed format, for example the identification data in the fixed format identify the modulation modes used by the audio data to be transmitted; or the audio data to be transmitted may be transmission data containing a variable content, for example the transmission data containing the variable content are various data commonly required to be transmitted, such as user information, trade information and so on.

At step S102, the first device modulates the audio data to be transmitted using at least two modulation modes respectively.

In an embodiment of the present disclosure, the modulation mode is an amplitude modulation, a frequency modulation, a carrier modulation or a subcarrier modulation.

At step S103, audio data frame streams in the at least two modulation modes are generated.

In other words, in an embodiment of the present disclosure, the first device may modulate the audio data to be transmitted using four modulation modes respectively to generate audio data frame streams A, B, C and D in the four modulation modes, in which modulation modes corresponding to the audio data frame streams A, B, C and D are different from each other.

In an embodiment of the present disclosure, the audio data frame streams are obtained by modulating the audio data to be transmitted into an analog waveform signal using the modulation modes of the first device so as to generate the audio data frame streams.

At step S104, the first device splices the audio data frame streams in the at least two modulation modes into an audio data stream.

In an embodiment of the present disclosure, a manner of the splicing is a splicing manner without a time interval or a splicing manner with a time interval. The splicing is to connect the analog waveforms modulated using different modulation modes together.

At step S105, the audio data stream is transmitted to a second device in one transmission via an audio interface of the first device.

In an embodiment of the present disclosure, transmitting the audio data stream to the second device in one transmission via the audio interface of the first device further includes transmitting the audio data stream to the second device in one transmission in a same time reference frame via the audio interface of the first device.

The same time reference frame means that a length of a start moment and/or an end moment at a time period of each modulation waveform with respect to a predetermined reference moment is predetermined.

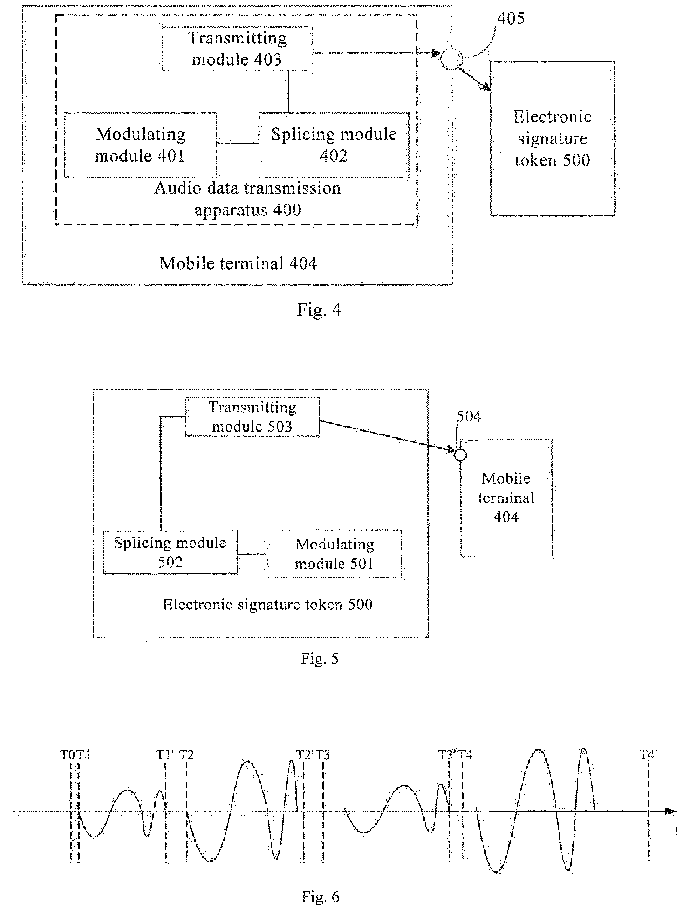

The same time reference frame is described in detail with reference to Fig. 6.

For example, two modulation waveforms are sent out in turn, a common reference moment on a time axis is determined as T0, a start moment of a time period of the first modulation waveform is set as T1, a period between T1 and T0 is predetermined; a start moment of a time period of the second modulation waveform is set as T2, a period between T2 and T0 is predetermined. Certainly, T2 is larger than T1 by this time.

Likewise, the period between the end moment of the time period of each modulation waveform and the predetermined reference moment is predetermined. For example, the common reference moment on the time axis is determined as T0, an end moment of the time period of the first modulation waveform is set as Tl', a period between T1' and T0 is predetermined; an end moment of the time period of the second modulation waveform is set as T2', a period between T2' and T0 is predetermined. Certainly, T2' is larger than T1' by this time.

Certainly, the start moment T2 of the time period of the second modulation waveform may be identical with the end moment T1' of the time period of the first modulation waveform.

Likewise, the period between both the start moment and end moment of the time period of each modulation waveform and the predetermined reference moment may be predetermined.

Certainly, in the embodiment of the present disclosure, the predetermined reference moments may be identical or different.

Certainly, in the embodiment of the present disclosure, each modulation waveform may be located anywhere within the time period.

For example: 1) a start moment of a modulation waveform is identical with a start moment of a time period of the modulation waveform, and an end moment of the modulation waveform is identical with an end moment of the time period of the modulation waveform, see T1-T1' shown in Fig. 6.
2) The start moment of the modulation waveform is identical with the start moment of the time period of the modulation waveform, and the end moment of the modulation waveform is different from the end moment of the time period of the modulation waveform, see T2-T2' shown in Fig. 6.
3) The start moment of the modulation waveform is different from the start moment of the time period of the modulation waveform, and the end moment of the modulation waveform is identical with the end moment of the time period of the modulation waveform, see T3-T3' shown in Fig. 6.
4) The start moment of the modulation waveform is different from the start moment of the time period of the modulation waveform, and the end moment of the modulation waveform is different from the end moment of the time period of the modulation waveform, see T4-T4' shown in Fig. 6. When the start moment of the modulation waveform is different from the start moment of the time period of the modulation waveform, and the end moment of the modulation waveform is different from the end moment of the time period of the modulation waveform, the start moment of each modulation waveform should be synchronized according to a synchronization head information thereof.

In another embodiment of the present disclosure, transmitting the audio data stream to the second device in one transmission via the audio interface of the first device further includes transmitting the audio data stream to the second device in one transmission in different time reference frames via the audio interface of the first device.

The different time reference frames are frames in which a start moment of each modulation waveform is obtained according to a synchronization head information.

Specifically, when the audio data to be transmitted are modulated into the audio data frame streams, it is required to generate the synchronization head information which is configured to indicate the start moment of each modulation waveform, and to add the generated synchronization head information into the audio data frame streams. Thus, it is ensured that when the audio data stream is transmitted to the second device in one transmission in different time reference frames, the second device can find a synchronization head of each modulation waveform according to the audio data stream sent from the first device, obtain synchronization head information of the each modulation waveform and find the start moment of the each modulation waveform according to the synchronization head information, thus ensuring that the second device can receive the audio data correctly.

Therefore, the above audio data frame streams A, B, C and D in the four modulation modes are spliced into the audio data stream, and thus it is convenient for the audio data to be transmitted in one transmission, the number of times of transmission is reduced, the probability of data distortion is decreased, a data quantity during the data interaction is improved and the success rate of the data transmission is also improved. In addition, the probability of data transmission failure due to a degree of distortion during the data interaction is decreased and the quality of the data interaction is also improved.

Specifically, in an embodiment of the present disclosure, the second device may be the electronic signature token, such as an audio Key (i.e. a Key with an audio interface) which is a Key device similar to a USB Key and has a different data transmission manner, but embodiments of the present disclosure are not limited to this.

With the audio data transmission method according to embodiments of the present disclosure, the audio data frame streams in different modulation modes can be spliced into the audio data stream so as to perform the data interaction in one transmission, thus greatly improving the data quantity in one data interaction. In addition, after two communicating parties select an available modulation mode in which the data transmission is performed, the degree of distortion of the interactive data is largely reduced, thus ensuring the quality of the data interaction.

An audio data transmission system according to embodiments of the present disclosure will be described with reference to Figs. 2 and 3.

As shown in Fig. 2, the audio data transmission system includes a first device 201 and a second device 202, and the first device 201 is connected with the second device 202 via an audio interface 203. The first device 201 modulates audio data to be transmitted using at least two modulation modes to generate audio data frame streams in the at least two modulation modes, splices the audio data frame streams in the at least two modulation modes into an audio data stream and transmits the audio data stream to the second device 202 in one transmission via the audio interface 203.

In an embodiment of the present disclosure, the first device 201 is further configured to transmit the audio data stream to the second device 202 in one transmission in a same time reference frame via the audio interface 203.

The same time reference frame means that a length of a start moment and/or an end moment at a time period of each modulation waveform with respect to a predetermined reference moment is predetermined.

In another embodiment of the present disclosure, the first device 201 is further configured to transmit the audio data stream to the second device 202 in one transmission in different time reference frames via the audio interface 203.

The different time reference frames are frames in which a start moment of each modulation waveform is obtained according to a synchronization head information. Certainly, when the audio data to be transmitted are modulated into the audio data frame streams, it is further required to generate the synchronization head information which is configured to indicate the start moment of each modulation waveform, and to add the generated synchronization head information into the audio data frame streams, such that it is ensured that the start moment of each modulation waveform can be obtained.

In an embodiment of the present disclosure, the audio data to be transmitted are identification data in a fixed format or transmission data containing a variable content. The identification data in the fixed format can identify the modulation modes used by the audio data to be transmitted; the transmission data containing the variable content are various data commonly required to be transmitted, such as user information, trade information and so on.

Moreover, the audio data frame streams are generated by modulating the audio data to be transmitted into an analog waveform signal using the modulation modes of the first device 201 so as to generate the audio data frame streams.

In the embodiment of the present disclosure, the modulation mode may be an amplitude modulation, a frequency modulation, a carrier modulation or a subcarrier modulation.

Specifically, in an embodiment of the present disclosure, as shown in Fig. 3, the first device 201 may modulate the audio data to be transmitted using four modulation modes respectively to generate audio data frame streams A, B, C and D in the four modulation modes, in which modulation modes corresponding to the audio data frame streams A, B, C and D are different from each other.

The first device 201 splices the above audio data frame streams A, B, C and D in the four modulation modes into the audio data stream, and thus it is convenient for the audio data to be transmitted in one transmission, the number of times of transmission is reduced, the probability of a data distortion is decreased and the data quantity during the data interaction is also improved.

In an embodiment of the present disclosure, a manner of the splicing may be a splicing manner without a time interval or a splicing manner with a time interval. The splicing is to connect the analog waveforms modulated using different modulation modes together.

Specifically, in an embodiment of the present disclosure, the first device 201 may be a mobile terminal and the second device 202 may be an electronic signature token.

With the audio data transmission system according to embodiments of the present disclosure, the data interaction between the first device 201 and the second device 202 can be performed rapidly, and thus the data quantity during the data interaction is improved. In addition, after two communicating parties select an available modulation mode in which the data transmission is performed, the distortion and the degree of distortion of the interactive data are largely reduced, thus ensuring and improving the quality of the data interaction.

An audio data transmission apparatus 400 for a mobile terminal according to embodiments of the present disclosure will be further described in the following with reference to Fig. 4.

As shown in Fig. 4, the apparatus 400 is used in a mobile terminal 404 and includes a modulating module 401, a splicing module 402 and a transmitting module 403.

The modulating module 401 is configured to modulate audio data to be transmitted using at least two modulation modes to generate audio data frame streams in the at least two modulation modes. The splicing module 402 is configured to splice the audio data frame streams in the at least two modulation modes into an audio data stream. The transmitting module 403 is configured to transmit the audio data stream to an electronic signature token 500 in one transmission via an audio interface 405 of the mobile terminal 404.

In an embodiment of the present disclosure, the transmitting module 403 is further configured to transmit the audio data stream to the electronic signature token 500 in one transmission in a same time reference frame via the audio interface 405 of the mobile terminal 404.

The same time reference frame means that a length of a start moment and/or an end moment at a time period of each modulation waveform with respect to a predetermined reference moment is predetermined.

In another embodiment of the present disclosure, the transmitting module 403 is further configured to transmit the audio data stream to the electronic signature token 500 in one transmission in different time reference frames via the audio interface 405 of the mobile terminal 404.

The different time reference frames are frames in which a start moment of each modulation waveform is obtained according to a synchronization head information. Certainly, when the audio data to be transmitted are modulated into the audio data frame streams, it is further required to generate the synchronization head information which is configured to indicate the start moment of each modulation waveform, and to add the generated synchronization head information into the audio data frame streams, such that it is ensured that the start moment of each modulation waveform can be obtained.

In an embodiment of the present disclosure, the modulating module 401 is further configured to modulate the audio data to be transmitted into an analog waveform signal using the modulation modes of the apparatus 400 so as to generate the audio data frame streams.

The audio data to be transmitted may be identification data in a fixed format or transmission data containing a variable content. The identification data in the fixed format can identify the modulation modes used by the audio data to be transmitted; the transmission data containing the variable content are various data commonly required to be transmitted, such as user information, trade information and so on.

In addition, the modulating module 401 modulates in following manners: an amplitude modulation, a frequency modulation, a carrier modulation or a subcarrier modulation.

In an embodiment of the present disclosure, a manner of the splicing of the splicing module 402 may be a splicing manner without a time interval or a splicing manner with a time interval. The splicing is to connect the analog waveforms modulated using different modulation modes together.

With the audio data transmission apparatus 400 for the mobile terminal according to embodiments of the present disclosure, the data interaction between the audio data transmission apparatus 400 and the electronic signature token 500 can be performed rapidly, thus improving the speed of the data interaction and saving time. In addition, the degree of distortion of the data during the interaction is largely reduced, thus ensuring the quality of the data interaction.

An electronic signature token 500 according to embodiments of the present disclosure will be described in the following with reference to Fig. 5.

As shown in Fig. 5, the electronic signature token 500 includes a modulating module 501, a splicing module 502 and a transmitting module 503.

The modulating module 501 is configured to modulate audio data to be transmitted using at least two modulation modes to generate audio data frame streams in the at least two modulation modes. The splicing module 502 is configured to splice the audio data frame streams in the at least two modulation modes into an audio data stream. The transmitting module 503 is configured to transmit the audio data stream to a mobile terminal 404 in one transmission via an audio interface 504 of the electronic signature token 500.

In an embodiment of the present disclosure, the transmitting module 503 is further configured to transmit the audio data stream to the mobile terminal 404 in one transmission in a same time reference frame via the audio interface 504 of the electronic signature token 500.

The same time reference frame means that a length of a start moment and/or an end moment at a time period of each modulation waveform with respect to a predetermined reference moment is predetermined.

In another embodiment of the present disclosure, the transmitting module 503 is further configured to transmit the audio data stream to the mobile terminal 404 in one transmission in different time reference frames via the audio interface 504 of the electronic signature token 500.

The different time reference frames are frames in which a start moment of each modulation waveform is obtained according to a synchronization head information. Certainly, when the audio data to be transmitted are modulated into the audio data frame streams, it is further required to generate the synchronization head information which is configured to indicate the start moment of each modulation waveform, and to add the generated synchronization head information into the audio data frame streams, such that it is ensured that the start moment of each modulation waveform can be obtained.

In an embodiment of the present disclosure, the modulating module 501 is further configured to modulate the audio data to be transmitted into an analog waveform signal using the modulation modes of the electronic signature token 500 so as to generate the audio data frame streams.

The audio data to be transmitted may be identification data in a fixed format or transmission data containing a variable content. The identification data in the fixed format can identify the modulation modes used by the audio data to be transmitted; the transmission data containing the variable content are various data commonly required to be transmitted, such as user information, trade information and so on.

Moreover, the modulating module 501 modulates in following manners: an amplitude modulation, a frequency modulation, a carrier modulation or a subcarrier modulation.

In addition, in an embodiment of the present disclosure, the splicing module 502 splices the audio data frame streams in a splicing manner without a time interval or a splicing manner with a time interval. The splicing is to connect the analog waveforms modulated using different modulation modes together.

With the electronic signature token 500 according to embodiments of the present disclosure, the data interaction between the mobile terminal 404 and the electronic signature token 500 can be performed rapidly, thus improving the data quantity during the data interaction and saving time. In addition, the degree of distortion of the data during a subsequent interaction is largely reduced, thus ensuring the quality of the data interaction.

Any procedure or method described in the flow charts or described in any other way herein may be understood to comprise one or more modules, portions or parts for storing executable codes that realize particular logic functions or procedures. Moreover, advantageous embodiments of the present disclosure comprises other implementations in which the order of execution is different from that which is depicted or discussed, including executing functions in a substantially simultaneous manner or in an opposite order according to the related functions. This should be understood by those skilled in the art to which embodiments of the present disclosure belong.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It is understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two
or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the phrases throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from principles and scope of the present disclosure.

## Claims

1. An electronic signature token (500), comprising:
a modulating module (501) configured to modulate audio data to be transmitted into an analog waveform signal using at least two modulation modes to generate audio data frame streams in the at least two modulation modes;
a splicing module (502) configured to splice the audio data frame streams in the at least two modulation modes into an audio data stream;
a transmitting module (503) configured to transmit the audio data stream to a mobile terminal in one transmission via an audio interface of the electronic signature token.

2. The electronic signature token according to claim 1, wherein the transmitting module (503) is further configured to transmit the audio data stream to the mobile terminal in one transmission via the audio interface of the electronic signature token (500) according to a format in which an interval between a start moment and/or an end moment and a predetermined reference moment is predetermined.

3. The electronic signature token according to claim 1, wherein the transmitting module (503) is further configured to transmit the audio data stream to the mobile terminal in one transmission in different time reference frames via the audio interface of the electronic signature token (500).

4. The electronic signature token according to claim 3, wherein the different time reference frames are frames in which a start moment of each modulation waveform is obtained according to a synchronization head information.

5. The electronic signature token according to claim 4, wherein the synchronization head information configured to indicate the start moment of each modulation waveform is generated when the modulating module (501) modulates the audio data to be transmitted into the audio data frame streams, and the generated synchronization head information is added into the audio data frame streams.

6. The electronic signature token according to any one of claims 1-5, wherein a manner of the splicing is a splicing manner without a time interval or a splicing manner with a time interval.

7. An audio data transmission apparatus (400) for a mobile terminal, comprising:
a modulating module (401) configured to modulate audio data to be transmitted into an analog waveform signal using at least two modulation modes to generate audio data frame streams in the at least two modulation modes;
a splicing module (402) configured to splice the audio data frame streams in the at least two modulation modes into an audio data stream;
a transmitting module (403) configured to transmit the audio data stream to an electronic signature token in one transmission via an audio interface of the mobile terminal.

8. The apparatus according to claim 7, wherein the transmitting module (403) is further configured to transmit the audio data stream to the electronic signature token in one transmission via the audio interface of the mobile terminal according to a format in which an interval between a start moment and/or an end moment and a predetermined reference moment is predetermined.

9. The apparatus according to claim 7, wherein the transmitting module (403) is further configured to transmit the audio data stream to the electronic signature token in one transmission in different time reference frames via the audio interface of the mobile terminal.

10. The apparatus according to claim 9, wherein the different time reference frames are frames in which a start moment of each modulation waveform is obtained according to a synchronization head information.

11. The apparatus according to claim 10, wherein the synchronization head information configured to indicate the start moment of each modulation waveform is generated when the modulating module modulates the audio data to be transmitted into the audio data frame streams, and the generated synchronization head information is added into the audio data frame streams.

12. The apparatus according to any one of claims 7-11, wherein a manner of the splicing is a splicing manner without a time interval or a splicing manner with a time interval.

13. An audio data transmission system, comprising an electronic signature token (500) according to any one of claims 1-6 and an audio data transmission apparatus (400) for a mobile terminal according to any one of claims 7-12 connected with each other via the audio interface of the mobile terminal and the audio interface of the electronic signature token.

## Patentansprüche

1. Ein elektronisches Signatur-Token (500), der elektronische Signatur-Token umfassend:
ein Modulationsmodul (501), das so konfiguriert ist, dass es Audiodaten, die in ein analoges Wellenformsignal zu übertragen sind, unter Verwendung von mindestens zwei Modulationsmodi moduliert, um Audiodatenframeströme in den mindestens zwei Modulationsmodi zu erzeugen;
ein Spleißmodul (502), das konfiguriert ist, um die Audiodatenrahmenströme in den mindestens zwei Modulationsmodi in einen Audiodatenstrom zu spleißen;
ein Übertragungsmodul (503), das konfiguriert ist, um den Audiodatenstrom zu einem mobilen Endgerät per einer Übertragung über eine Audioschnittstelle des elektronischen Signatur-Tokens zu übertragen.

2. Das elektronische Signatur-Token nach Anspruch 1, wobei das Sendemodul (503) ferner eingerichtet ist, den Audiodatenstrom in einer Übertragung über die Audio-Schnittstelle des elektronischen Signatur-Tokens (500) gemäß einem Format an das mobile Endgerät zu übertragen bei dem ein Intervall zwischen einem Startmoment und / oder einem Endmoment und einem vorbestimmten Referenzmoment vorgegeben ist.

3. Das elektronische Signatur-Token nach Anspruch 1, wobei das Sendemodul (503) ferner eingerichtet ist, den Audiodatenstrom an das mobile Endgerät in einer Übertragung in unterschiedlichen Zeitreferenzrahmen über die Audioschnittstelle des elektronischen Signatur-Tokens (500) zu übertragen.

4. Das elektronische Signatur-Token nach Anspruch 3, wobei die unterschiedlichen Zeitreferenzrahmen Rahmen sind, in denen ein Startmoment jeder Modulationswellenform gemäß einer Synchronisationskopfinformation erhalten wird.

5. Das elektronische Signatur-Token nach Anspruch 4, wobei die Synchronisationskopfinformation, die konfiguriert ist, um den Startmoment jeder Modulationswellenform anzuzeigen, erzeugt wird, wenn das Modulationsmodul (501) die zu übertragenden Audiodaten in die Audiodatenframeströme moduliert die erzeugte Synchronisationskopfinformation wird zu den Audiodatenrahmenströmen hinzugefügt.

6. Das elektronische Signatur-Token nach einem der Ansprüche 1 bis 5, wobei eine Art des Spleißens eine Spleißweise ohne ein Zeitintervall oder eine Spleißweise mit einem Zeitintervall ist.

7. Ein Audiodatenübertragungsgerät (400) für ein mobiles Endgerät, das Audiodatenübertragungsgerät ferner umfassend:
ein Modulationsmodul (401), das so konfiguriert ist, dass es Audiodaten, die in ein analoges Wellenformsignal zu übertragen sind, unter Verwendung von mindestens zwei Modulationsmodi moduliert, um Audiodaten-Frame-Ströme in den mindestens zwei Modulationsmodi zu erzeugen;
ein Spleißmodul (402), das konfiguriert ist, um die Audiodatenrahmenströme in den mindestens zwei Modulationsmodi in einen Audiodatenstrom zu spleißen;
ein Übertragungsmodul (403), das konfiguriert ist, um den Audiodatenstrom zu einem elektronischen Signatur-Token in einer Übertragung über eine Audio-Schnittstelle des mobilen Endgeräts zu übertragen.

8. Die Vorrichtung nach Anspruch 7, wobei ferner das Sendemodul (403) ferner eingerichtet ist, den Audiodatenstrom an das elektronische Signatur-Token in einer Übertragung über die Audio-Schnittstelle des mobilen Endgeräts gemäß einem Format zu übertragen, in dem ein Intervall zwischen ein Startmoment und / oder ein Endmoment und ein vorbestimmter Referenzmoment ist vorbestimmt.

9. Die Vorrichtung nach Anspruch 7, wobei ferner das Sendemodul (403) ferner eingerichtet ist, den Audiodatenstrom zu dem elektronischen Signatur-Token in einer Übertragung in unterschiedlichen Zeitreferenzrahmen über die Audio-Schnittstelle des mobilen Endgeräts zu übertragen.

10. Die Vorrichtung nach Anspruch 9, wobei ferner die verschiedenen Zeitreferenzrahmen Rahmen sind, in denen ein Startmoment jeder Modulationswellenform gemäß einer Synchronisationskopfinformation erhalten wird.

11. Die Vorrichtung nach Anspruch 10, wobei ferner die Synchronisationskopfinformation, die zum Anzeigen des Startmoments jeder Modulationswellenform konfiguriert ist, erzeugt wird, wenn das Modulationsmodul die in die Audiodatenrahmenströme zu übertragenden Audiodaten moduliert, und die erzeugte Synchronisationskopfinformation wird zu den Audio-Datenrahmenströmen hinzugefügt.

12. Vorrichtung nach einem der Ansprüche 7-11, wobei ferner eine Art des Spleißens eine Spleißweise ohne ein Zeitintervall oder eine Spleißweise mit einem Zeitintervall ist.

13. Audio-Datenübertragungssystem, umfassend ein elektronisches Signatur-Token (500) nach einem der Ansprüche 1 bis 6 und ferner eine Audiodaten-Übertragungsvorrichtung (400) für ein mobiles Endgerät nach einem der Ansprüche 7 bis 12, die mit jeder anderen Einheit über die Audioschnittstelle des mobilen Endgeräts und die Audioschnittstelle des elektronischen Signatur-Tokens verbunden sind.

## Revendications

1. Jeton de signature électronique (500) comprenant :
un module de modulation (501) conçu pour moduler des données audio à transmettre, en un signal à forme d'onde analogique, à l'aide d'au moins deux modes de modulation pour produire des flux de trames de données audio dans les deux modes de modulation ou davantage ;
un module de raccordement (502) conçu pour raccorder les flux de trames de données audio dans les deux modes de modulation ou davantage, en un flux de données audio ;
un module de transmission (503) conçu pour transmettre le flux de données audio à un terminal mobile, en une transmission, par le biais d'une interface audio du jeton de signature électronique.

2. Jeton de signature électronique selon la revendication 1, dans lequel le module de transmission (503) est conçu en outre pour transmettre le flux de données audio au terminal mobile, en une transmission, par le biais de l'interface audio du jeton de signature électronique (500), selon un format dans lequel un intervalle entre un instant de début et/ou un instant de fin et un instant de référence prédéterminé est prédéterminé.

3. Jeton de signature électronique selon la revendication 1, dans lequel le module de transmission (503) est conçu en outre pour transmettre le flux de données audio au terminal mobile, en une transmission, dans différentes trames de référence de temps, par le biais de l'interface audio du jeton de signature électronique (500).

4. Jeton de signature électronique selon la revendication 3, dans lequel les différentes trames de référence de temps sont des trames dans lesquelles un instant de début de chaque forme d'onde de modulation est obtenu selon des informations d'en-tête de synchronisation.

5. Jeton de signature électronique selon la revendication 4, dans lequel les informations d'en-tête de synchronisation conçues pour indiquer l'instant de début de chaque forme d'onde de modulation sont produites lorsque le module de modulation (501) module les données audio à transmettre, en flux de trames de données audio, et les informations d'en-tête de synchronisation produites sont ajoutées aux flux de trames de données audio.

6. Jeton de signature électronique selon l'une quelconque des revendications 1 à 5, dans lequel une manière de raccordement est une manière de raccordement sans intervalle de temps ou une manière de raccordement avec un intervalle de temps.

7. Appareil de transmission de données audio (400) destiné à un terminal mobile, comprenant :
un module de modulation (401) conçu pour moduler des données audio à transmettre en un signal à forme d'onde analogique, à l'aide d'au moins deux modes de modulation pour produire des flux de trames de données audio dans les deux modes de modulation ou davantage ;
un module de raccordement (402) conçu pour raccorder les flux de trames de données audio dans les deux modes de modulation ou davantage, en un flux de données audio ;
un module de transmission (403) conçu pour transmettre le flux de données audio à un jeton de signature électronique, en une transmission, par le biais d'une interface audio du terminal mobile.

8. Appareil selon la revendication 7, dans lequel le module de transmission (403) est conçu en outre pour transmettre le flux de données audio au jeton de signature électronique, en une transmission, par le biais de l'interface audio du terminal mobile, selon un format dans lequel un intervalle entre un instant de début et/ou un instant de fin et un instant de référence prédéterminé est prédéterminé.

9. Appareil selon la revendication 7, dans lequel le module de transmission (403) est conçu en outre pour transmettre le flux de données audio au jeton de signature électronique, en une transmission, dans différentes trames de référence de temps, par le biais de l'interface audio du terminal mobile.

10. Appareil selon la revendication 9, dans lequel les différentes trames de référence de temps sont des trames dans lesquelles un instant de début de chaque forme d'onde de modulation est obtenu selon des informations d'en-tête de synchronisation.

11. Appareil selon la revendication 10, dans lequel les informations d'en-tête de synchronisation conçues pour indiquer l'instant de début de chaque forme d'onde de modulation sont produites lorsque le module de modulation module les données audio à transmettre, en flux de trames de données audio, et les informations d'en-tête de synchronisation produites sont ajoutées aux flux de trames de données audio.

12. Appareil selon l'une quelconque des revendications 7 à 11, dans lequel une manière de raccordement est une manière de raccordement sans intervalle de temps ou une manière de raccordement avec un intervalle de temps.

13. Système de transmission de données audio, comprenant un jeton de signature électronique (500) selon l'une quelconque des revendications 1 à 6 et un appareil de transmission de données audio (400) destiné à un terminal mobile selon l'une quelconque des revendications 7 à 12, connectés entre eux par le biais de l'interface audio du terminal mobile et de l'interface audio du jeton de signature électronique.
